(19) Europäisches Patentamt
European Patent Office
Office européen des brevets

(11) **EP 2 460 898 A1**

(12) **EUROPEAN PATENT APPLICATION**


(43) Date of publication:
**06.06.2012 Bulletin 2012/23**

(21) Application number: **10193771.2**

(22) Date of filing: **06.12.2010**

(51) Int Cl.:
***C22B 3/30*** *(2006.01)* ***C01G 3/12*** *(2006.01)*
***C23G 5/02*** *(2006.01)* ***H01F 27/12*** *(2006.01)*
***H01F 27/34*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**



(71) Applicant: **ABB Research Ltd.**
**8050 Zürich (CH)**

(72) Inventors:
- **Dahlund, Mats**
**777 60 Söderbärke (SE)**
- **Pitois, Claire**
**172 72 Sundbyberg (SE)**
- **Rogeau, Antoine**
**721 83 Västerås (SE)**

(74) Representative: **Ahrengart, Kenneth**
**ABB AB**
**Intellectual Property**
**Ingenjör Bååths Gata 11, T2 Floor E**
**721 83 Västerås (SE)**


(54) **Chemical method for removing copper sulphide (Cu2S) deposited onto insulating material in a transformer**


(57) A method for removing copper sulphide ($Cu_2S$) deposited onto electrically insulating materials of components in an electrical apparatus, such as a transformer or a bushing, wherein normally present electrically insulating oil has been substantially removed, and on other surfaces of such apparatus, comprising the following steps: providing a chemical treatment solution comprising at least one non-polar solvent and at least one chelating agent being able of forming complexes with copper from the surface of $Cu_2S$ deposited onto the insulating material, said chelating agent containing free electrons capable of forming a complexation with Cu, being at least a bidentate, but preferably a multidentate, i.e. being able of forming complexes with Cu from more than one point in the chelating agent, and having a solubility in the non-polar solvent of at least 0,05 mol/L to allow extraction of copper by solvation of the formed copper-chelating complex; and optionally additional components; subjecting the insulating material to the solution, preferably at a temperature of 30-130 °C, more preferably 50-90°C, for a predetermined time period, preferably 1 to 15 days, more preferably 3 to 7 days; and removing the chemical treatment solution from the insulating material.


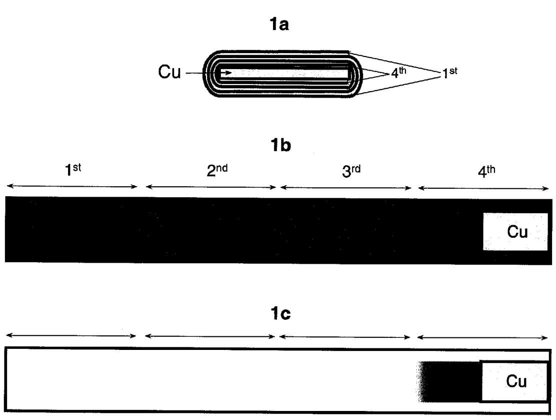


Fig 1

EP 2 460 898 A1

## Description

The present invention relates to a method of removing copper sulphide deposits present in electrically insulating layers in an electrical apparatus, such as transformers, bushings or the like, wherein a substantial amount of an electrically insulating oil, normally present in the electrical apparatus has been removed.

## Background

Insulating oils are widely used in a number of apparatus in the field of electrical power transmission and electrical power generation, for example; power transformers, distribution transformers, tap changers, switchgear and reactors. Such electrically insulating oils often contain traces of reactive sulphur compounds, which may react with copper, forming copper sulphide ($Cu_2S$). Copper sulphide is insoluble in oil and may form deposits on surfaces and materials in contact with the electrically insulating oils inside the electrical apparatus. Copper sulphide is a conductor and the formation of a semi-conducting deposit on surfaces and materials in the electrical apparatus may degrade or disrupt the operation of the apparatus.

If the semi-conducting copper sulphide is deposited on the isolation material (usually cellulose material e.g. paper) used to cover the copper conductors in the electrical apparatus, this might lead to a degrading of the insulation properties of the isolation material which could lead to leak currents or short circuits. Semi-conducting copper sulphide deposits on surfaces of solid isolation materials, such as cellulose-based material, ceramic, polymer and composite inside the electrical apparatus may also create similar problems. Copper sulphide deposits can also occur on other surfaces in an electrical apparatus, such as pressboards, spacers and magnetic cores.

Attempts have been made to overcome the problem of formation of $Cu_2S$ deposits by method for removing sulphur-containing compounds from the insulating oil, see e.g. WO2005115082. Further, attempts have been made to treat $Cu_2S$ deposits already formed. WO2008024060 discloses a method of treating $Cu_2S$ deposits with an oxidizing gas. However, these attempts have some undesirable side effects, e.g. in that oxidizing treatments are aggressive and may cause corrosion and degradation of the electrically insulating material.

There is a need for a method of removing $Cu_2S$ deposits from insulating cellulose-based materials, such as winding paper, without significantly damaging the properties of the insulating material and causing corrosion of the metal parts contained in the transformer.

## Summary of the invention

The present invention relates to a method for removing copper sulphide ($Cu_2S$) deposited onto electrically insulating materials of components in an electrical apparatus, such as a transformer or a bushing, wherein normally present electrically insulating oil has been substantially removed, and on other surfaces of such apparatus, comprising the following steps:

- providing a chemical treatment solution comprising at least one non-polar solvent, and preferably at least one chelating agent being able of forming complexes with copper from the surface of $Cu_2S$ deposited onto the insulating material, said at least one chelating agent containing free electrons capable of forming a complexation with Cu, being at least a bidentate, but preferably a multidentate, i.e. being able of forming complexes with Cu from more than one point in the chelating agent, and having a solubility in the at least one non-polar solvent of at least 0,05 mol/L, at the temperature used during the treatment, namely 30-130˚C, to allow extraction of copper by solvation of the formed copper-chelating complex; and optionally additional components,
  said chemical treatment solution being non-aqueous, i.e. comprising an amount of water corresponding to the environmental humidity dissolved in the solvent;
- subjecting the insulating material to the solution, preferably at a temperature of 30-130 ˚C, more preferably 50-90˚C, for a predetermined time period, preferably 1 to 15 days, more preferably 3 to 7 days; and
- removing the chemical treatment solution from the insulating material. By means of this method $Cu_2S$ deposits can be removed from insulating cellulose-based materials, without significantly damaging the properties of the insulating material and causing corrosion of the metal parts contained in the transformer.

A non-polar solvent within the meaning of the present invention relates to a solvent that has a low dielectric constant and displays a low miscibility with water, i.e. equal to or below 1 g per 100 g of water at 20˚C and a pressure of 1 atmosphere.

The method may further comprise the steps of rinsing the insulating material with at least one non-polar solvent, and drying with at least one non polar solvent at a temperature of at least 15˚C, at a pressure below atmospheric pressure. A chemical treatment solution comprising at least one chelating agent in an amount of 0,01-99 % by weight

of the at least one non-polar solvent, preferably 2 to 85 % by weight , most preferably 20 to 70 % by weight is suitable. The chemical treatment solution preferably comprises at least one chelating agent in an amount of at least 0,1 % by weight based upon the entire treatment solution.

Chelating agents, which have a solubility of at least 0,05 mol/L in the at least one non-polar solvent, preferably at least 0,1 mol/L, most preferably at least 0,2 mol/L at the temperature chosen for the treatment, viz. 30-130˚C, are suitable for use in the present method.

The chelating agent preferably comprises at least one group which contains free electrons capable of bonding toward Cu, or, optionally, toward both Cu and sulphur, said group being amine, hydroxy, carboxylate, ketone, phosphorous-containing, nitril, aldoxime, ketoxime or sulfur-containing groups, and may be chosen among: amine based carboxylic acids with a solubility in water equal or below 1 g/L at 25˚C, salicylidene compounds, e.g. 1,2-cyclohexanediamino-N,N'-bis(3,5-di-t-butylsalicylidene), N,N'-Bis(salicylidene)ethylenediamine, or pyridylazo naphthol; amine-based compounds such as triaza molecule, e.g.Triazabicyclo dec-5-ene; mono or bidentate carboxylic acids, e.g. hexadecyl malonic acid, or isostearic acid or octanoic acid, carbazones and thiocarbazones, e.g. diphenyl thiocarbazone (dithizone); phosphinic acid derivatives, e.g. diisooctylphosphinic acid; porphyrin, tetrabenzoporphyrin, tetraazaporphyrine and phthalocyanine-type molecules, diketones such beta-diketones, e.g. diphenyl diketone, 1-phenyldecan-1,3-dione or 1-(4-Methoxyphenyl)-3-(4-tert-butylphenyl)propane-1,3-dione, aldoxime or oxime, such as 5,8-diethyl-7-hydroxydodecan-6-oxime, 5-nonyl salicylaldoxime, 5-docecyl salicylaldoxime or 2-hydroxy-5-nonyl acetophenone oxime.

Preferred chelating agents are 5-nonyl salicylaldoxime, 5-docecyl salicylaldoxime, and 1,2-cyclohexanediamino-N,N'-bis(3,5-di-t-butylsalicylidene).

The at least one non-polar solvent suitably has a flash point above 50 ˚C, preferably above 80 ˚C, and is advantageously selected from the group consisting of linear or branched hydrocarbons having 8 or more carbons in the main chain; alkylated or non-alkylated cycloalkanes or aromatic hydrocarbons having 8 or more carbons; alkyl or cyclic acetate or acetoacetate based solvent with more than 8 carbons; cyclic or aliphatic phenols or ketones of more than 8 carbons, for instance Shellsol™ D70, dodecyl acetate, branched or linear octadecane, phenylcyclohexane, or cyclodecanone or any combinations thereof.

In the method the chemical treatment solution may be fed to a space in which the insulation material to be treated is located, and wherein the chemical treatment solution is sprayed through spray nozzles over the surface to be treated, such that it flows over the surface having the $C_{U2}S$ deposit, and is collected at the bottom of the space, and is recirculated to the spray nozzles. The chemical treatment solution may alternatively be fed to a space in which the insulation material to be treated is located, such that said insulation material is substantially immersed in chemical treatment solution, and that the chemical treatment solution is circulated through said space, by taking out treatment solution through an outlet opening arranged in the space, leading it through a circulation conduit, and returning it through an inlet opening arranged in the space, while keeping the amount of chemical treatment solution inside the space at a level ensuring that the insulation material is substantially immersed in the solution.

Further in accordance with the method of the present invention, the electrically insulating material is heated, using for instance low frequency heating converter, to a temperature of between 30-130 ˚C, preferably 50-90˚C, and the chemical treatment solution is maintained at a temperature lower than 50˚C, preferably lower than 30˚C, through connecting a cooling system to the circulation conduit, which enhances the removal process at the same time as the remaining parts of the electrical apparatus are not exposed to significantly elevated temperatures.

## Detailed description

Conducting copper sulphide deposited on the isolation material (usually cellulose material e.g. paper) used to cover the copper conductors in an electrical apparatus, might lead to degradation of the insulation properties of the insulating material, which could lead to leak currents or short circuits. Therefore, such copper sulphide deposits on surfaces and materials in the electrical apparatus may degrade or disrupt the operation of the apparatus.

The present invention relates to a method for removing copper sulphide ($Cu_2S$) deposited onto electrically insulating materials of components in an electrical apparatus, such as a transformer or a bushing, wherein normally present electrically insulating oil has been substantially removed, and on other surfaces of such apparatus. The method comprises the steps of providing a chemical treatment solution, subjecting the insulating materials having the $Cu_2S$ deposits to the solution at a predetermined temperature and time, and removing the chemical treatment solution.

The electrically insulating material may be a cellulose material, e.g. winding paper, or solid isolation materials, such as cellulose-based material, ceramic, polymer and composite. It is important to ensure that the electrically insulating material of the electrical apparatus is not damaged by the treatment, and that metal parts are not affected by corrosion. Some of the electrical apparatus, like transformers, cables, or bushings contain oil impregnated paper. For insulating cellulose-based materials, such as e.g. paper it is important to maintain the degree of polymerisation of the component contained in the insulating paper, as well as mechanical, electrical and dielectric properties.

It has been found within the present invention that a chemical treatment solution comprising at least one non-polar solvent is effective for removing $Cu_2S$ deposits from electrically insulating materials. By non-polar solvent is in this context meant a solvent having low dielectric constants and displaying a low miscibility with water, i.e. below 1 g per 100 g of water at 20˚C and a pressure of 1 atmosphere. The inventors have discovered that the use of various other types of treatment solutions may negatively impacts certain parts of the electrical apparatus.The present invention, however, represents a mild but efficient treatment. Thus, a novel type of $Cu_2S$ treatment solution and methods for $Cu_2S$ removal have been developed in the present invention, in order to provide a more efficient and advantageous alternative for $Cu_2S$ removal processes.

As a function of the hydrophobic moieties present in the chelating agents in accordance with the present invention, the chelating agents can be solubilized by the at least one non-polar solvents. Additionally, as a result of the inherent aprotic and non-polar nature of the at least one non-polar solvents of the present invention, the solvents do not cause swelling of cellulose-based materials or hydrolysis, meaning that the treatment solutions and the methods of the present invention exhibit the important, advantageous property of not swelling the paper. Furthermore, the at least one non-polar solvents as per the present invention may, advantageously, be used on-site without excessive electrical caution, since the non-polarity of the solvents is associated with low, or essentially no risk, for adverse electrical events, such as burnouts and/or short circuits.

Preferably, the at least one non-polar solvent has a flash point above 50 ˚C, preferably above 80 ˚C. A high flash point allows for kinetics that are sufficiently efficient, since the temperature is allowed to increase as long as the flash point is above that temperature.. The reaction temperature should preferably be kept below its flash point of the solvent so as to decrease the risk of explosion of a flammable solvent in contact with air. Preferred non-polar solvents may be selected from the group consisting of linear and/or branched hydrocarbons having 8 or more carbons in the main chain; aliphatic (linear, branched or cyclic) and/or aromatic hydrocarbons having 8 or more carbons; alkyl (linear, branched or cyclic) and/or aromatic acetate or acetoacetate based solvent with more than 8 carbons; alkyl (linear, branched or cyclic) and/or aromatic ketones or diketones of more than 8 carbons, for instance C11-C14 paraffins and naphthenes (Shellsol™ D70), isoparaffinic fluid (Isopar™ M), dodecyl acetate.

The chemical treatment solution used within the method of the present invention preferably comprises at least one chelating agent, which is capable of forming complexes with copper from the surface of $Cu_2S$ deposited onto the isolation material. The chelating agent should contain free electrons capable of forming a complexation with Cu, or, optionally, with both Cu and sulphur, and should be at least a bidentate, but preferably a multidentate, i.e. being able of forming complexes with Cu from more than one point in the chelating agent. Further the chelating agent should have a solubility in the at least one non-polar solvent of at least 0,05 mol/L, preferably at least 0,1 mol/L and most preferably at least 0,2 mol/L at the temperature chosen for the treatment, namely 30-130˚C, to allow for extraction of copper by solvation of the formed copper-chelating complex. If desired additional components may optionally be included. The chemical treatment solution should preferably not comprise oxidizing agents, since that may cause undesired corrosion on metal parts of the electrical apparatus and partial degradation of paper and other cellulose-based materials. Strong oxidants could also damage some polymers and composites. Chelating agents used for the treatment are soluble enough in the solvent to not stick on the surface of the paper. The copper in the $Cu_2S$ deposit is very mobile, which means that when there is a depletion of copper from the top layer of the deposit, a concentration gradient of copper throughout the thickness of the deposit is created, which will be a driving force for the migration of copper from inner layers of the deposit to an outer layer where the copper is scavenged by the chelating agent and the solvent.

The chemical treatment solution preferably comprises at least one chelating agent in an amount of 0,1-99,9 % by weight of the at least one non-polar solvent, in order to increase the removal efficiency. A content of chelating agent above 0,1 % by weight, decreases the time needed for the reaction. The chemical treatment solution more preferably comprises 2 to 85 % by weight, most preferably 40 to 75 % by weight, in order to obtain an efficient treatment at reasonable temperatures and time periods. The concentration may vary with the type of chelating agent, the number of wrapped paper layers to be treated in the electrical apparatus, and the temperature.

The chemical treatment solution advantageously comprises at least one chelating agent in an amount of at least 0, 1 % by weight based upon the entire treatment solution, in order to increase the removal efficiency as compared to the solvent without addition of chelating agent.

The chelating agent preferably has a solubility of at least 0,05 mol/L in the at least one non-polar solvent, preferably at least 0,1 mol/L, most preferably at least 0,2 mol/L, in order to be able to effectively extract the copper by solvation of the formed copper-chelating agent complex.

As indicated above, the chelating agent comprises at least one group containing free electrons capable of bonding toward Cu, or optionally, both Cu and sulphur, suitably amine, hydroxy, carboxylate, ketone, phosphorous-containing, nitril, aldoxime, ketoxime, or sulfur-containing groups.

It has been found within the present invention that the chelating agents listed below are particularly suitable for use in the chemical treatment solution:

- amine based carboxylic acids with a solubility in water below 1 g/100 g at 25˚C

- mono or bidentate carboxylic acids, e.g. hexadecyl malonic acid, or isostearic acid or octanoic acid or decanoic acid or dodecanoic acid;
- salicylidene compounds, e.g. 1,2-cyclohexanediamino-N,N'-bis(3,5-di-t-butylsalicylidene), N,N'-Bis(salicylidene) ethylenediamine, or pyridylazo naphthol;
- amine-based compounds such as triaza molecule, e.g.Triazabicyclo dec-5-ene;
- carbazones and thiocarbazones, e.g. diphenyl thiocarbazone (= dithizone);
- phosphinic acid derivatives, e.g. diisooctylphosphinic acid;
- porphyrin, tetrabenzoporphyrin, tetraazaporphyrine and phthalocyanine-type molecules.
- diketones such beta-diketones, e.g. diphenyl diketone, 1-phenyldecan-1,3-dione or 1-(4-Methoxyphenyl)-3-(4-*tert*-butylphenyl)propane-1,3-dione,
- aldoximes or oximes, such as 5,8-diethyl-7-hydroxydodecan-6-oxime, 5-nonyl salicylaldoxime, 5-docecyl salicylaldoxime or 2-hydroxy-5-nonyl acetophenone oxime.

Among these 5-nonyl salicylaldoxime, 5-docecyl salicylaldoxime and 1,2-cyclohexanediamino-N,N'-bis(3,5-di-t-butylsalicylidene) are particularly preferred as excellent results have been obtained using these chelating agents. The chelating agents of the present invention appear to display a high equilibrium constant to form the Cu, or, optionally, Cu and sulphur, complexations, which could, without wishing to be bound by any particular theory, derive from the formation of a cage-shaped complexation site.

Certain chelating agents of the present invention may bind both towards Cu and towards sulphur, which may result in facilitated removal of the $Cu_2S$ deposits. Optionally, without wishing to be bound by any particular theory, similar effects may be obtained by using a combination of at least two chelating agents that may, or may not, display certain differences in their chelating affinities (wherein, for instance, a first chelating agent preferentially binds towards Cu and a second chelating agent preferentially binds towards sulphur), so as to improve the removal of the $C_{U2}S$ deposits.

The at least one non-polar solvent in accordance with the present invention may be selected from the group consisting of linear or branched hydrocarbons having 8 or more carbons in the main chain; alkanes and/or alkylated or non-alkylated cycloalkanes or alkylated or non-alkylated aromatic hydrocarbons having 8 or more carbons; alkyl or cyclic or aromatic acetate or acetoacetate based solvent with more than 8 carbons; aliphatic (linear or cyclic) and/or aromatic ketones or diketones of more than 8 carbons, for instance dodecyl acetate, branched or linear octadecane, phenylcyclohexane, ShellsolTM D70, and Isopar™ M, Isopar™ L, cyclodecanone and any combinations thereof.

Before initiating the treatment for removing $Cu_2S$ deposits from the insulating material, any insulating oil contained in the electrical apparatus is substantially drained. Cleaning of the surfaces is typically not necessary.

The insulating materials to be treated may be subjected to the chemical treatment solution described above at a predetermined temperature, suitably 30-130 ˚C. At temperatures below 30˚C, the reaction may be too slow, but this depends on a number of different factors, for instance the exact composition and concentration of the treatment solution. While above 130˚C the insulating material may be damaged. Above 130˚C the degradation rate of paper may become significant, with the treatment times that are needed. If the temperature is too low (for instance below 30˚C) the kinetics of extraction would be too slow. The treatment temperature is more preferably 50-90˚C. The treatment is performed for a predetermined time period, preferably 1 to 15 days, more preferably 3 to 7 days. The time period depends mostly on the efficiency of the chelating agent, the temperature, the number of wrapped paper layer to treat, and the chelating agent concentration. A short treatment time is advantageous from an economical point of view. Cellulose-based insulating materials such as winding paper should not be subjected to too high temperatures for a too long time. Treatment at temperatures of 130 ˚C or lower for up to fifteen days will not harm the insulating material.

After the treatment, the chemical treatment solution is removed from the insulating material. The method may include steps of rinsing the insulating material with at least one non-polar solvent at a temperature varying from 30 to 130 ˚C, and drying with a non polar solvent at a temperature of at least 15˚C, at a pressure below atmospheric pressure. Drying can also be performed with non-polar solvent in vapour phase. By rinsing or cleaning with at least one non-polar solvent residual chelating agent can be effectively removed. The chelating agent which is partly polar, but still soluble in the at least one non-polar solvent, may crystallize in the insulation material. By effectively removing the chelating agent, the risk of electrical failure after refilling with oil, caused by local electric stress due to different dielectric constants between such crystals and the oil in the equipment is reduced. Drying with at least one non-polar solvent leads to creation of an azeotrope with any residual water that may be present in the electrical apparatus, so that any water can be removed at a temperature below 100˚C, thus preventing ageing of the insulating material.

The insulating material is suitably located inside a space enclosing the insulating material during the treatment. Typically, the treatment is performed by feeding chemical treatment solution directly to the electrical apparatus, after having substantially removed any normally present electrically insulating oil. Thus, the space in which the insulting material is located during treatment is the electrical apparatus. Cleaning of the insulating material surface is not necessary before subjecting it to the treatment solution.

The chemical treatment solution may be fed to the space in which the insulation material to be treated is located,

e.g. the electrical apparatus, such that said insulation material is substantially immersed in chemical treatment solution. By immersing the insulating material in the treatment solution it can be ensured that all parts of the insulating material surface area is in contact with the treatment solution, such that effective removal of $Cu_2S$ deposits can be achieved. The chemical treatment solution is preferably circulated through the space, in order to enhance the rate of $Cu_2S$ deposit removal, by taking out treatment solution through an outlet opening arranged in the space, leading it through a circulation conduit, and returning it through an inlet opening arranged in the space, while keeping the amount of chemical treatment solution inside the space at a level ensuring that the insulation material is immersed in the solution. Conveniently, the outlet opening is arranged at or near the bottom of the space, and the inlet opening is arranged at or near the top of the space, so that the treatment solution is taken out in the lower part of the space, and is pumped through the circulation conduit to the upper part of the space. However, other locations for the inlet and outlet openings may be desired, depending e.g. on how the insulating material is oriented inside the space.

Alternatively, the chemical treatment solution can be sprayed through spray nozzles over the surface to be treated, such that it flows over the surface having the $Cu_2S$ deposit, and is collected at the bottom of the space, and is recirculated to the spray nozzles. By spraying, a smaller amount of treatment solution is required for performing the method, thus decreasing the expenses for chemical treatment solution. In order to obtain effective treatment, several spray nozzles may be arranged such that all parts of the surface to be treated will come into contact with the treatment solution.

In order to successfully control the reaction kinetics, for the removal of the $Cu_2S$ deposits, and the temperature in the transformer, the chemical solution treatment may be recirculated in and out of an electrical apparatus, for instance a transformer, in a circulating conduit that leads the solution in and out of the electrical apparatus. The circulating conduit may be connected to a cooling system that aids in maintaining the chemical treatment solution in the circulating conduit below a certain temperature. Simultaneously, the electrically insulating material may be heated, using for instance low frequency heating converter, in order to optimize the temperature conditions for the removal of $Cu_2S$ deposits whilst the remaining parts of the electrical apparatus are maintained at a lower temperature. Thus, heating the electrically insulating material, to enhance the removal of the $Cu_2S$ deposits, and at the same time maintaining the chemical treatment solution at a lower temperature when not actually exposed to the electrically insulating material results both in efficient $Cu_2S$ removal and less harsh conditions for the remaining parts of the electrical apparatus.

The electrically insulating material from which the $Cu_2S$ deposits are to be removed may advantageously be heated, using for instance low frequency heating converter, to a temperature of between 30-130 ˚C, preferably 50-90˚C. Additionally, the chemical treatment solution may simultaneously be maintained at a temperature lower than 50˚C, preferably lower than 30˚C, through connecting a cooling system to the circulation conduit.

**Examples**

The following abbreviations will be used in the description of the experiments:

ShellSol™ D70: a low aromatic, inert hydrocarbon solvent consisting predominantly of C11- C14 paraffins and naphthenes. Shellsol™ D70 was provided by Shell Chemicals.

DBDS: dibenzyl disulfide

$Cu_2S$: copper sulphide

Commercial solutions from the LIX® series was generously provided from Cognis, ACORGA®M5640 was generously provided by Cytec.

**1. Sample preparation**

1.1 Process to deposit copper sulphide ($Cu_2S$) on kraft paper

A corrosive oil was prepared by mixing 1 liter of Nytro10 XN and 1 L of Nytro 10GBN oil (both from Terna, Italy) with 2.7 g of 2,6-ditert-butyl-4-methphenol (antioxidant) and adding 440 mg of dibenzyldisulfide, such that the total content of DBDS in the oil mixture was approximately 350 ppm (the initial content in Nytro 10GBN is approximately 200 ppm, Nytro 10XN does not contain DBDS).

Three windings made of two layers of kraft paper wrapped around neat copper pieces having a length of about 15 cm were immersed in the corrosive oil mixture in test tubes. The test tubes were degassed under vacuum over night, and then placed in a heating block at 120 ˚C. A gas flow of 2% of oxygen in nitrogen at a rate of approximately 17 mL/min was continuously injected through the oil over a period of about 500 h. The collected copper sulphide ($Cu_2S$) deposited

papers were washed in cyclohexane to remove oil and were allowed to dry in air. The amount of copper and sulphur deposited on the paper was measured by ICP-OES, as described below in the characterization section: the amount of copper measured was 65 to 67 $\mu g/cm^2$ and the amount of sulphur measured was 13 to 15 $\mu g/cm^2$.

In some experiments described below the $Cu_2S$ deposited paper was treated with chemical solutions as it is, while in other experiments the $Cu_2S$ deposited paper was wrapped around a piece of copper as described below to evaluate the efficiency of the chemical treatment to diffuse through paper layers.

1.2 Wrapping $Cu_2S$ deposited paper around neat copper

A strip of $Cu_2S$ deposited paper (90 mm long and 20 mm broad) was tightly wrapped around a piece of neat copper (from an electrical winding, surface: 10x9 $mm^2$ and 1 mm thick) to form 4 layers of paper, in such a way that the $Cu_2S$ deposit was facing toward the copper wire on every turn. The lateral paper edges were sewn together with cotton thread to avoid free contact of the copper with the treatment solution.

1.3 Impregnation in oil

Some of the paper samples were impregnated in oil (Nytro 10XN) under vacuum over night to minimize residual air bubbles. The paper was then removed from the oil, and excess oil was removed into an absorbing paper.

## 2. Characterizations

2.1 Concentrations of copper and sulphur deposited on the paper were measured by ICP-OES (Inductively Coupled Plasma with Optical Emission Spectrometers) Varian "Vista-Pro CCD simultaneous" with radial plasma. The copper reference standard was Accu Trace 1000 mg/mL of Cu in water and 2 % $HNO_3$ (according to standard NIST SRM# 928). The sulphur reference standard was purchased from Alfa Aesar (Specpure®) : 1000 mg/mL of sulphur in water and 1002 mg/L of $(NH_4)_2SO_4$ (according to standard NIST SRM 3154).

The ICP equipment was calibrated with 4 pieces of reference paper (no $Cu_2S$ deposit) of 8 $cm^2$ surface area each, which were cut into pieces and placed in 4 Teflon tubes. In each tube, both copper and sulphur reference standards were added at the following concentrations 0; 2; 6; and 20 mg/mL. In each tube 8 mL of concentrated nitric acid ($HNO_3$) added.

To check the calibration curve a fifth Teflon tube was prepared with 8 $cm^2$ of reference paper cut into pieces, 10 mg/mL of both Cu and S standard references and 8 mL of concentrated nitric acid.

The paper samples to be analyzed (with $Cu_2S$) were of 25 to 33 $cm^2$ surface area, cut in pieces, and placed into Teflon tubes with 8 mL of concentrated nitric acid.

All the tubes were then placed in a microwave oven of 600 W power with the following temperature steps: heating from 23 °C to 130 °C in 60 min, holding at 130 °C for 15 min and cooling down back to 23 °C in about 50 min. The resulting solutions became completely transparent. All the tubes were then diluted up to 25 mL with demineralised water and ready to be analyzed by ICP-OES.

2.2 Concentrations of copper, sulphur and iron dissolved in the solutions, after treatment of $Cu_2S$ deposited paper, were measured by ICP-OES (Inductively Coupled Plasma with Optical Emission Spectrometers) Varian "Vista-Pro CCD simultaneous" with radial plasma. The copper reference standard was Accu Trace 1000 mg/mL of Cu in water and 2 % $HNO_3$ (according to standard NIST SRM# 928). The sulphur reference standard was purchased from Alfa Aesar (Specpure®) : 1000 mg/mL of sulfur in water and 1002 mg/L of $(NH_4)_2SO_4$ (according to standard NIST SRM 3154). The iron reference standard was purchased from Alfa Aesar (Specpure®): 1000 mg/mL of Fe in water and 2-5 % $HNO_3$ (according to standard NIST SRM# 3126a).

The ICP equipment was calibrated with 5 reference samples prepared in 10 mL graduated flasks such that each flask contained 2 mL of NMP and each of the three copper, sulphur and iron reference standards at the following concentrations: 0; 3; 10; 30 and 100 mg/mL. In each flask, 0,5 mL of concentrated nitric acid was added and the solutions were diluted up to a volume of 10 mL with demineralised water.

To confirm the calibration curve a sixth graduated flask was prepared with 2 mL of a solution that had been used for treatment of $Cu_2S$ deposit (already containing a measured amount of copper, sulphur and iron), into which all three standards (Cu, S and Fe) were added at a concentration of 10 mg/mL. 8 mL of concentrated nitric acid was added and the solution was diluted up to 10 mL with demineralised water. After analysis by ICP it was checked that the values of Cu, S and Fe did increased by 10 mg/mL.

The treatment solutions having unknown amounts of dissolved copper, sulphur and iron were prepared as follows: 2 mL of the solution to be analyzed was added in a 10 mL graduated flask with 0,5 mL of concentrated nitric acid and the solution was diluted up to a volume of 10 mL. Each prepared sample was then ready to be analyzed by ICP-OES.

2.3 Measurement of degree of polymerization in paper

This measurement was performed according to the IEC 60450 standard, i.e. measurement of the average viscometric degree of polymerization of new and aged cellulosic electrically insulating materials.

2.4 Surface resistance

Surface resistance was measured using a concentric ring probe geometry consisting of a center measuring electrode (outer diameter = 2 mm) and an outer voltage ring electrode (inner diameter of the electrode = 4 mm), which leads to a measuring distance of 1 mm. A Keithley 617 electrometer was used for voltage supply and resistance measurement. The relationship between surface resistivity and the surface resistance for cylindrical electrodes geometry is given by the following equation:

$$\rho = R\frac{2\pi}{\ln\frac{r_1}{r_2}}$$

With
p= surface resistivity (Ohm)
R= surface resistance (Ohm)
$r_1$= inner radius of the outer ring electrode
$r_2$= outer radius of the center electrode

**3. Examples of Removal of $Cu_2S$**

For each reaction of the examples described below, the solvent was degassed under nitrogen for 30 min prior to being added into the reaction flask.

**Example 1 - Removal of $Cu_2S$ on unwrapped paper with non polar solvent and chelating agents** $Cu_2S$ deposited papers of 4 cm length and 2 cm width were immersed in solution containing the following components listed in **Table 1.** The flasks were heated to 90 ˚C for 7 days. The solution was then removed from the flask, and the paper was washed 3 times with cyclohexane. The paper samples were dried at 70 ˚C over night and the obtained surface resistivity values are given in **Table 1 and 2.** At these given condition parameters, octanoic acid, isostearic acid and the reagent solutions LIX® tested give the best results. It was observed that the reaction time could have been shortened to 3 days for these chelating agents to get the similar surface resistivity values.

**Table 1:** Experimental parameters and surface resistivity calculated from the surface resistance measurements performed on the unwrapped paper treated with various chelating agents at 90 ˚C.

| Chelatant | Non polar solvent | Weight of chelatant (g) | Volume of solvent (mL) | Surface resistivity (Ohm) after treatment. |
|---|---|---|---|---|
| - | Dodecyl acetate | 0 | 3.70 | $20.10^3$ |
| Salen 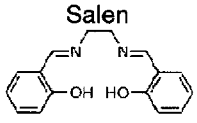 | Dodecyl acetate | 0.0115 | 3.68 | $450\cdot10^9$ |

(continued)

| Chelatant | Non polar solvent | Weight of chelatant (g) | Volume of solvent (mL) | Surface resistivity (Ohm) after treatment. |
|---|---|---|---|---|
| Hexanoic acid 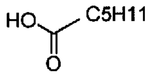 | Dodecyl acetate | 0.1520 | 3.34 | $110 \cdot 10^{9}$ |
| Octanoic acid 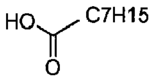 | Dodecyl acetate | 0.1712 | 7.00 | $> 1.8 \cdot 10^{12}$ |
| Isostearic acid | Dodecyl acetate | 0.3360 | 3.50 | $> 1.8 \cdot 10^{12}$ |
| Octanoic acid 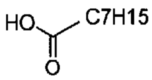 | Shellsol™ D70 | 0.1455 | 3.5 | $> 1.8 \cdot 10^{12}$ |

**Table 2:** Experimental parameters and surface resistivity calculated from the surface resistance measurements performed on the unwrapped paper treated with various chelating agent solutions at 90 ˚C.

| Chelating agent solution | Dilution with solvent: | Volume of chelating agent solution (mL) | Volume of added solvent (mL) | Surface resistivity (Ohm) after treatment. |
|---|---|---|---|---|
| LIX®612 N-LV | - | 5.00 | - | $> 1.8 \cdot 10^{12}$ |
| LIX®860 N-IC | - | 5.00 | - | $> 1.8 \cdot 10^{12}$ |
| LIX®860IC | - | 5.00 | - | $> 1.8 \cdot 10^{12}$ |
| LIX®973 N | - | 5.00 | - | $> 1.8 \cdot 10^{12}$ |
| LIX®984 N-C | - | 5.00 | - | $> 1.8 \cdot 10^{12}$ |
| LIX®54-100 | - | 5.00 | - | $> 1.8 \cdot 10^{12}$ |
| LIX®860 IC | Dodecyl acetate | 1.166 | 2.340 | $360 \cdot 10^{9}$ |
| LIX®860 IC | Dodecyl acetate | 1.684 | 1.820 | $> 1.8 \cdot 10^{12}$ |

**Example 2 - Removal of $Cu_2S$ on wrapped paper with non polar solvent and chelating agents**

A $Cu_2S$ deposited paper wrapped around a copper piece to form 4 layers, as described in the sample preparation above, was immersed in a solution as described in Table 3 below. The flask was heated to 90 ˚C for 14 days. After treatment, the solution was removed from the flask, and the wrapped sample was washed 5 times with hot cyclohexane (60 ˚C) and dried at 70 ˚C over night. The surface resistivity was measured on each of the paper layers and compared with reference samples: (a) clean Kraft paper and (b) Kraft paper with $Cu_2S$ deposit. The results are given in Table 4 below. It was observed that the $Cu_2S$ deposit is successively removed from every layer, except for the $4^{th}$ layer in contact with the copper wire as shown in Figure 1. Since the fourth layer is in direct contact with the copper wire, the remaining

$Cu_2S$ on that layer does not present a serious electrical weakness for the system. The amount of the copper and sulphur dissolved in the solution after treatment for each of the three samples is in the range of 250-300 and 20-40 wt% respectively of the initial copper and sulphur amount measured in the initial $Cu_2S$ deposited paper (ICP measurements). The excess of dissolved copper originates from the dissolution of copper from the neat copper wire placed in the middle of the sample. The remaining sulphur amount in the treated paper is in the range of 60 -80 wt% of the initial sulphur contained in the $Cu_2S$ deposited paper.

**Table 3:** Experimental parameters performed on the wrapped paper treated with various chelating agent solutions at 90 ˚C.

| Sample # | Chelating agent solution | Dilution with solvent: | Volume of chelating agent solution (mL) | Volume of added solvent (mL) |
|---|---|---|---|---|
| 1 | LIX®860 IC | - | 7.00 | - |
| 2 | LIX®860 IC | Shellsol™ D70 | 1.10 | 5.00 |
| 3 | ACORGA®M5640 | - | 5.00 | - |

Figure 1a illustrates the copper having paper wrapped around it (cross-section), and Figures 1 b and 1 c illustrate the $Cu_2S$ deposit on the paper, before (Fig 1 b) and after (Fig 1 c) treatment, where the copper piece is shown in one end of the wrapping paper and the outermost paper layer is located at the other end of the paper.

**Table 4:** Surface resistivity calculated from the surface resistance measurements performed on the wrapped paper treated with the chelating agent solution given in Table 2.

| Sample | Layer # | Surface Resistivity before treatment (Ohm) | Surface Resistivity after treatment (Ohm) |
|---|---|---|---|
| $Cu_2S$ contaminated Kraft paper wrapped around copper wire and treated with treatment solution: 1 | 1 | $14 \cdot 10^3$ | $>1.8*10^{12}$ |
| | 2 | $6 \cdot 10^3$ | $>1.8*10^{12}$ |
| | 3 | $11 \cdot 10^3$ | $>1.8*10^{12}$ |
| | 4 | $13 \cdot 10^3$ | $15*10^3$ |
| $Cu_2S$ contaminated Kraft paper wrapped around copper wire and treated with treatment solution: 2 | 1 | $11 \cdot 10^3$ | $>1.8*10^{12}$ |
| | 2 | $9 \cdot 10^3$ | $>1.8*10^{12}$ |
| | 3 | $13 \cdot 10^3$ | $>1.8*10^{12}$ |
| | 4 | $8 \cdot 10^3$ | $13*10^3$ |
| $Cu_2S$ contaminated Kraft paper wrapped around copper wire and treated with treatment solution: 3 | 1 | $10 \cdot 10^3$ | $>1.8*10^{12}$ |
| | 2 | $11 \cdot 10^3$ | $>1.8*10^{12}$ |
| | 3 | $9 \cdot 10^3$ | $>1.8*10^{12}$ |
| | 4 | $8 \cdot 10^3$ | $14*10^3$ |
| Reference Kraft paper (no $Cu_2S$ contamination) wrapped around copper wire | 1 | $>1.8*10^{12}$ | $>1.8*10^{12}$ |
| | 2 | $>1.8*10^{12}$ | $>1.8*10^{12}$ |
| | 3 | $>1.8*10^{12}$ | $>1.8*10^{12}$ |
| | 4 | $>1.8*10^{12}$ | $>1.8*10^{12}$ |

As can be seen from Table 4 the treatments are very efficient, since the surface resistivity is substantially increased.

**4. Impact of the treatment solution onto metal plates**

An iron metal plate of 2 $cm^2$ surface and 0,35 mm thick coated with enamel on its upper and lower surface but

not in the edges was immersed in a solution containing the characteristics of the samples described in Table 3. The flask was heated to 90 ˚C for 14 days. The solution was then removed from the flask, and the metal plate was washed 3 times with hot cyclohexane (70 ˚C) The plate was dried at 70 ˚C over night, the surface resistance of the metal plate was measured to $5.10^{11}$ Ohm. The reference untreated metal plate shows a surface resistance of the same value: $5 \cdot 10^{11}$ Ohm. The dissolved iron in the solution after treatment was measured in the range of 0.00050-0.00080 g/mL. No corrosion was observed on the neat edge by optical microscope.

**5. Impact of the treatment solution on the degree of polymerization (DP) of the paper**

The degree of polymerization of papers treated according to the above procedures were measured by viscosimetry:

- Reference kraft paper before any treatment: DP= 1175 $\pm$25
- Kraft paper aged according to the $Cu_2S$ deposition procedure (see sample prepartion above), but where no neat copper was in contact with the paper, so that the paper does not contain $Cu_2S$ deposit : DP = 860 $\pm$25.

$Cu_2S$ deposit paper which was treated according to Example 2 sample 2 in Table 3 (1.10 mL of LIX®860 IC in 5.00 mL Shellsol™ D70, at 90 ˚C for 14 days): DP= 840 $\pm$25. Comparing the paper before and after the $Cu_2S$ removal treatment shows that not significant decrease of the DP was observed.

## Claims

**1.** A method for removing copper sulphide ($Cu_2S$) deposited onto electrically insulating materials of components in an electrical apparatus, such as a transformer or a bushing, wherein normally present electrically insulating oil has been substantially removed, and on other surfaces of such apparatus, comprising the following steps:

- providing a chemical treatment solution comprising at least one non-polar solvent, and at least one chelating agent being able of forming complexes with copper from the surface of $Cu_2S$ deposited onto the insulating material, said at least one chelating agent containing free electrons capable of forming a complexation with Cu, preferably_being at least a bidentate, more preferably a multidentate, i.e. being able of forming complexes with Cu from more than one point in the chelating agent, and having a solubility in the at least one non-polar solvent of at least 0,05 mol/L to allow extraction of copper by solvation of the formed copper-chelating complex; and optionally additional components;
- subjecting the insulating material to the solution, preferably at a temperature of 30-130 ˚C, more preferably 50-90˚C, for a predetermined time period, preferably 1 to 15 days, more preferably 3 to 7 days;
- removing the chemical treatment solution from the insulating material.

**2.** The method of claim 1, further comprising the steps of rinsing the insulating material with at least one non-polar solvent, and drying with at least one non-polar solvent at a temperature of at least 15˚C, at a pressure below atmospheric pressure.

**3.** The method of claim 1 or 2, wherein the chemical treatment solution comprises at least one chelating agent in an amount of 0,1- 99,9 % by weight of the at least one non-polar solvent, preferably 2 to 85 % by weight, most preferably 40-75 % by weight.

**4.** The method of claim 3, wherein the chemical treatment solution comprises at least one chelating agent in an amount of at least 0,1 % by weight based upon the entire treatment solution.

**5.** The method of claim 3 or 4, wherein the at least one chelating agent has a solubility of at least 0,05 mol/L in the at least one non-polar solvent, preferably at least 0,1 mol/L, most preferably at least 0,2 mol/L.

**6.** The method of any one of claims 3-5, wherein the at least one chelating agent comprises at least one group which contains free electrons capable of bonding toward Cu, said group being amine, hydroxy, carboxylate, ketone, phosphorous-containing, nitril, aldoxime, ketoxime or sulfur-containing groups.

**7.** The method of any one of claims 3-6, wherein the at least one chelating agent is chosen among:

- amine based carboxylic acids with a solubility in water below 1 g/L at 25˚C;
- mono or bidentate carboxylic acids, e.g. hexadecyl malonic acid, or isostearic acid or octanoic acid or decanoic acid or dodecanoic.
- salicylidene compounds, e.g. 1,2-cyclohexanediamino-N,N'-bis(3,5-di-t-butylsalicylidene), N,N'-Bis(salicylidene)ethylenediamine, or pyridylazo naphthol;
- amine-based compounds such as triaza molecule, e.g.Triazabicyclo dec-5-ene;
- carbazones and thiocarbazones, e.g. diphenyl thiocarbazone (= dithizone);
- phosphinic acid derivatives, e.g. diisooctylphosphinic acid;
- porphyrin, tetrabenzoporphyrin, tetraazaporphyrine and phthalocyanine-type molecules
- diketones such beta-diketones, e.g. diphenyl diketone, 1-phenyldecan-1,3-dione or 1-(4-Methoxyphenyl)-3-(4-tert-butylphenyl)propane-1,3-dione;
- aldoxime or oxime, such as 5,8-diethyl-7-hydroxydodecan-6-oxime, 5-nonyl salicylaldoxime, 5-docecyl salicylaldoxime or 2-hydroxy-5-nonyl acetophenone oxime;
- and any combinations thereof.

**8.** The method of any one of claims 3-7, wherein the at least one chelating agent is either 5-nonyl salicylaldoxime, 5-docecyl salicylaldoxime or 1,2-cyclohexanediamino-N,N'-bis(3,5-di-t-butylsalicylidene).

**9.** The method of any one of claims 1-8, wherein the at least one non-polar solvent has a flash point above 50 ˚C, preferably above 80 ˚C.

**10.** The method of any one of claims 1-9, wherein the at least one non-polar solvent is selected from the group consisting of linear or branched hydrocarbons having 8 or more carbons in the main chain; alkanes and/or alkylated or non-alkylated cycloalkanes or alkylated or non-alkylated aromatic hydrocarbons having 8 or more carbons; alkyl or cyclic or aromatic acetate or acetoacetate based solvent with more than 8 carbons; aliphatic (linear or cyclic) and/or aromatic ketones or diketones of more than 8 carbons.

**11.** The method of any one of claims 1-10, wherein the at least one non-polar solvent is selected from the group consisting of dodecyl acetate, branched or linear octadecane, phenylcyclohexane, ShellsolTM D70, and Isopar™ M, Isopar™ L, cyclodecanone, and any combinations thereof.

**12.** The method of any one of claims 1-11, wherein the chemical treatment solution is fed to a space in which the insulation material to be treated is located, and wherein the chemical treatment solution is sprayed through spray nozzles over the surface to be treated, such that it flows over the surface having the $Cu_2S$ deposit, and is collected at the bottom of the space, and is recirculated to the spray nozzles.

**13.** The method of any one of claims 1-11, wherein the chemical treatment solution is fed to a space in which the insulation material to be treated is located, such that said insulation material is substantially immersed in chemical treatment solution, and that the chemical treatment solution is circulated through said space, by taking out treatment solution through an outlet opening arranged in the space, leading it through a circulation conduit, and returning it through an inlet opening arranged in the space, while keeping the amount of chemical treatment solution inside the space at a level ensuring that the insulation material is substantially immersed in the solution.

**14.** The method of claim 13, wherein the electrically insulating material is heated to a temperature of between 30-130 ˚C, preferably 50-90˚C, and the chemical treatment solution is maintained at a temperature lower than 50˚C, preferably lower than 30˚C, through connecting a cooling system to the circulation conduit.

**15.** The method of claim 14, wherein the electrically insulating material is heated using low frequency heating converter.

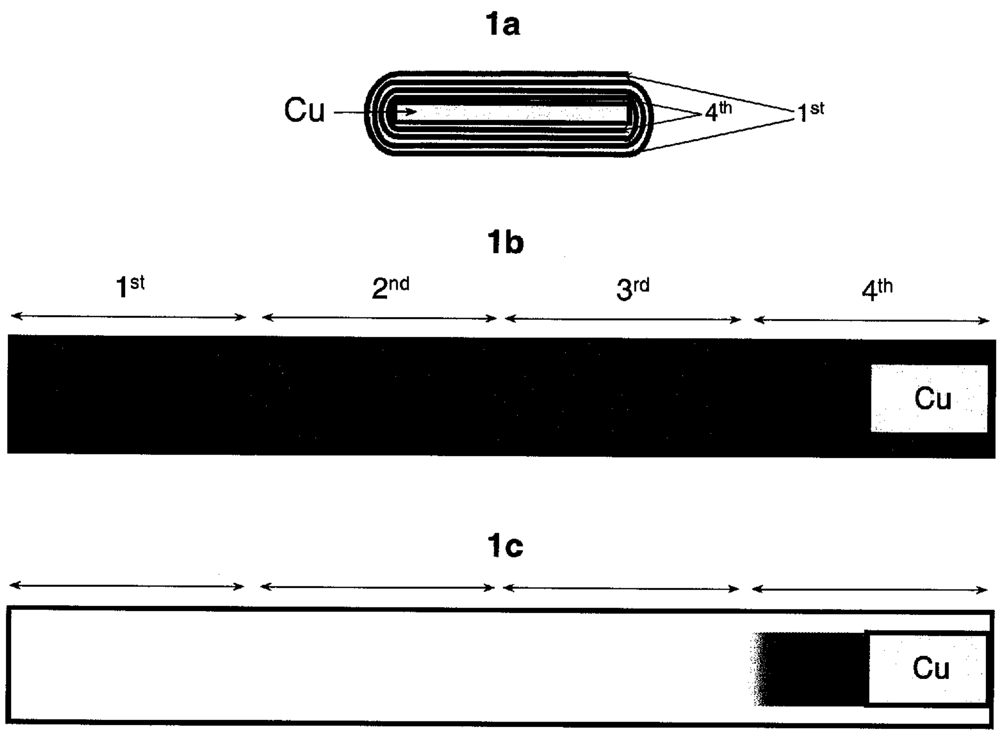


Fig 1

Europäisches Patentamt
European Patent Office
Office européen des brevets

# EUROPEAN SEARCH REPORT

Application Number
EP 10 19 3771

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | WO 2008/024060 A1 (ABB RESEARCH LTD [CH]; GUSTAFSSON KARIN [SE]; LEANDERSSON ROBERT [SE]) 28 February 2008 (2008-02-28)<br>* page 3, line 18 - line 24; claims 1-5; figures 1-3 *<br>----- | 1,7,8, 12-14 | INV.<br>C22B3/30<br>C01G3/12<br>C23G5/02<br>H01F27/12<br>H01F27/34 |
| Y | CLAES BENGTSSON ABB POWER TECHNOLOGIES AB LUDVIKA: "Oil corrosion and cu2s deposition in power transformers", CIGRE MOSCOW SYMPOSIUM,<br>2005, - 2005, pages 1-5, XP003018682,<br>* page 4, line 11 - line 13 *<br>----- | 1,7, 12-14 | |
| Y | JP 4 023886 A (KASEI OPTONIX)<br>28 January 1992 (1992-01-28)<br>* abstract *<br>----- | 1,7,8, 12-14 | |
| Y | DATABASE WPI<br>Week 199210<br>Thomson Scientific, London, GB;<br>AN 1992-077292<br>XP002635253,<br>& JP 4 023886 A (KASEI OPTONIX LTD)<br>28 January 1992 (1992-01-28)<br>* abstract *<br>----- | 1,7,8, 12-14 | TECHNICAL FIELDS SEARCHED (IPC)<br>C22B<br>C01G<br>C23G<br>H01F |
| A | JP 4 158271 A (MITSUBISHI ELECTRIC CORP)<br>1 June 1992 (1992-06-01)<br>* abstract; figure 1 *<br>----- | 1 | |
| Y | US 6 537 440 B1 (RICHMOND GEOFFREY [AU] ET AL) 25 March 2003 (2003-03-25)<br>* claims 16-29 *<br>----- | 7,8 | |

The present search report has been drawn up for all claims

1

| Place of search | Date of completion of the search | Examiner |
|---|---|---|
| The Hague | 4 May 2011 | Bombeke, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 10 19 3771

This annex lists the patent family members relating to the patent documents cited in the above-mentioned European search report.
The members are as contained in the European Patent Office EDP file on
The European Patent Office is in no way liable for these particulars which are merely given for the purpose of information.

04-05-2011

| Patent document cited in search report | Publication date | Patent family member(s) | Publication date |
|---|---|---|---|
| WO 2008024060 A1 | 28-02-2008 | AR 062530 A1 | 12-11-2008 |
| | | EP 2064713 A1 | 03-06-2009 |
| | | RU 2009109844 A | 27-09-2010 |
| | | US 2010012621 A1 | 21-01-2010 |
| JP 4023886 A | 28-01-1992 | NONE | |
| JP 4158271 A | 01-06-1992 | NONE | |
| US 6537440 B1 | 25-03-2003 | WO 0006784 A1 | 10-02-2000 |
| | | CA 2336284 A1 | 10-02-2000 |
| | | ES 2206004 A1 | 01-05-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005115082 A
- WO 2008024060 A